# EUROPEAN PATENT SPECIFICATION

(11) **EP 0 750 931 B1**
(45) Date of publication and mention of the grant of the patent: **12.09.2001**
(21) Application number: 96304791.5
(22) Date of filing: 28.06.1996
(51) Int. Cl.: B01D 47/02

(54) **Wet dust collecting apparatus**
Apparat zur nassen Staubsammlung
Appareil pour collecter la poussière par voie humide

(30) Priority: 30.06.1995 JP 18869695
(43) Date of publication of application: 02.01.1997
(73) Proprietor: NICOTEC CO., Tokyo (JP)
(72) Inventor: Asada, Yasunori, c/o Nicotec Co., Setagaya-ku, Tokyo (JP)
(74) Representative: Price, Paul Anthony King

(56) References cited:
- DE-C- 869 937
- GB-A- 1 162 143
- US-A- 2 048 145
- US-A- 3 812 658
- US-A- 5 292 353

## Description

The present invention relates to wet dust collecting apparatus, such as wet dust collecting apparatus for collecting fume dust generated when machining with a laser and plasma machine or cold dust generated in large quantities with a shotblast, sanding machine or the like.

As is well known, when machining with a laser and plasma machine, fume dust is generated having a very high temperature of 200-300°C, and as an apparatus for collecting such fume dust there have been so far known a dust collecting apparatus of a dry filter type and a wet dust collecting apparatus.

Advantages of such conventional wet dust collecting apparatus over that of the dry filter type are:
(1) that, when collecting with the dry filter, there can be risks that said dry filter will be burned or flue and the like are liable to cause combustion resulting in a fire and therefore night-unmanned operation of the machine is impossible, while, with the wet dust collecting apparatus, such night-unmanned operation is possible without the risk of fire;
(2) that, with the dry filter type dust collecting apparatus, there is involved a problem of environmental pollution that, when discharging the dust gathered in a recovery box, the dust will fly up to cause a risk of a worker breathing in the dust, while, with the wet dust collecting apparatus, some degree of solidification of the dust by addition of moisture enables a markedly easy posttreatment and there can be provided a good working environment without flying up of the dust;
(3) that, in the case of dry filter type, as the filter clogs with dust, dust sucking efficiency thereof largely decreases and results in so-called scorch and the like as well as worsened machining precision, while with the wet dust collecting apparatus there is no pressure loss due to clogging and the like and therefore machining precision can be balanced with a constant dust sucking efficiency; and
(4) that with the wet dust collecting apparatus there can be provided a deodorizing function since water can remove odor.

Therefore, the wet dust collecting apparatus is advantageous in case of machining with a laser and plasma machine.

However, such conventional wet dust collecting apparatus is generally constructed such that a mist generator is arranged in the dust collecting apparatus. The hot dust is sucked in a mist atmosphere generated by the mist generator and adheres to the mist, to be cooled and then collected with a filter. Such conventional wet dust collecting apparatus provided with the mist generator involves a problem that, since the mist generator must be separately provided in the dust collecting apparatus, construction of the latter apparatus becomes complicated and large-sized and increases the construction cost.

US-A-2,048,145 discloses wet dust collecting apparatus having the features of the preamble of Claim 1.

According to the present invention, there is provided wet dust collecting apparatus comprising:
a housing;
a suction passage leading into the housing for sucking in dust;
a water reservoir disposed in the housing;
a mist chamber which is above the water reservoir and downstream of the suction passage; and
a comb-toothed mist generator disposed at a position of communication between the suction passage and the mist chamber;
the arrangement being such that dust-containing air sucked into the suction passage is directed against the mist generator so as to vibrate the surface of water in the water reservoir at high speed to generate mist in the mist chamber which carries the dust downstream;
characterised in that the apparatus further comprises:
a dust filter which is downstream of the mist chamber; and
a fan for sucking dust from the suction passage through the mist chamber to the filter; and
the suction passage includes a final portion which tapers as it approaches the mist generator so as to increase the speed of the air flowing therethrough towards the mist generator.

Preferably, the teeth of the mist generator have their lower ends immersed in the water of the water reservoir.

The dust-containing air passes at increased speed from the narrowed downstream end of the suction passage through the comb teeth of the mist generator. The dust-containing air causes the water surface to vibrate at high speed and automatically generate mist which then floats in the mist chamber. Fume dust of the dust-containing air rebounded from the water surface adheres to the mist and is then collected by the filter after being cooled. Some dust dropped in the water without rebounding on the water surface is left gathered at the bottom of the water reservoir.

As described above, the wet dust collecting apparatus of the present invention has many excellent effects in that it can efficiently collect hot fume dust generated when machining with the laser and plasma machine and the like or cold dust generated in large amount with the shotblast or sanding machine and the like without separately providing the mist generator by introducing the dust into mist generated making use of suction pressure for the dust. It makes unmanned operation and easy post-treatment possible since the dust is collected with moisture without causing the risk of fire. It provides a stable machining precision since there is no pressure loss due to clogging and the like. It provides deodorising function since odor is collected by water, and it can be very simplified in construction to be small-sized and low-priced.

### BRIEF DESCRIPTION OF THE DRAWINGS

Fig. 1 is a cross-sectional view showing an example of the wet dust collecting apparatus according to the present invention;
Fig. 2 is a left side view of said wet dust-collecting apparatus;
Fig. 3 is an enlarged view for illustrating the construction of a communication portion between the suction passage and the mist room; and
Fig. 4 is an enlarged view for explaining the mist generating principle by a mist generator in the wet dust collecting apparatus.

### DESCRIPTION OF THE PREFERRED EMBODIMENT

Now, the present invention will be described in detail based on an example illustrated in the accompanying drawings.

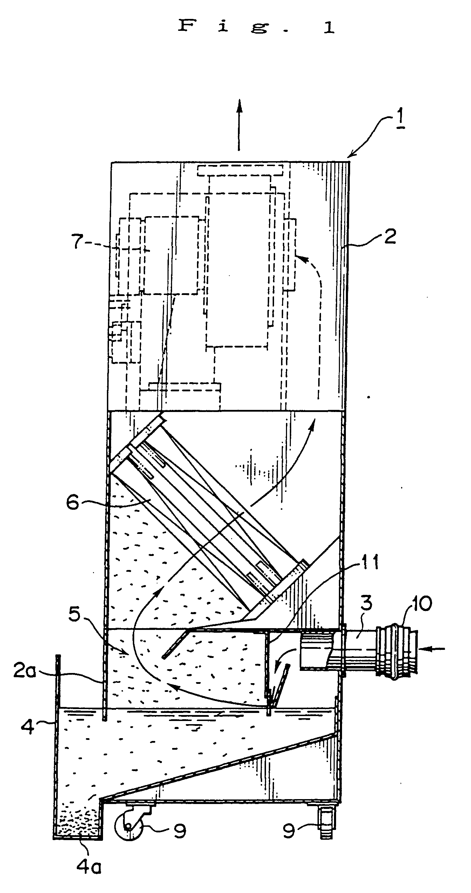

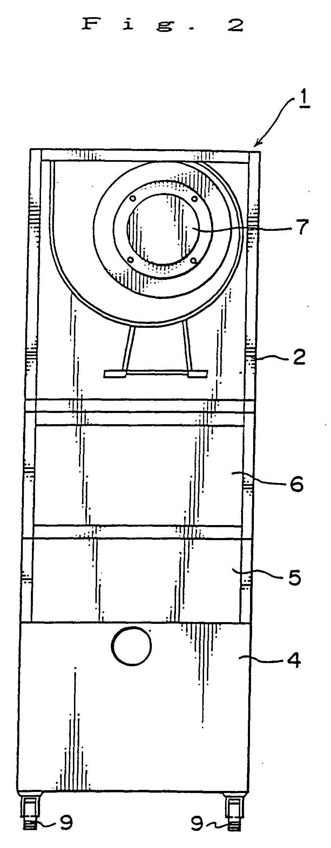

As shown in Figs. 1 and 2, the wet dust collecting apparatus 1 for collecting fume dust generated when machining with a laser and plasma machine comprises a housing 2, a suction passage 3 formed in the housing 2 for sucking high temperature laser and plasma dust, a water tub 4 arranged downstream of the suction passage 3, a mist room 5 formed in upper portion of the water tub 4, a **dust** separating filter 6 of collision and inertia type arranged above the mist room 5, a fan for sucking the laser and plasma dust from the suction passage 3 through the mist room 5 to the **dust** filter 6 of inertial mist separator type, and comb toothed mist generator 8 arranged at a communication portion between the suction passage 3 and mist room 5.

The housing 2 is provided on its bottom face with casters 9 for facilitating movement thereof. The suction passage 3 is formed from heat resisting material and an extendable duct 10 is connected at upstream end of the suction passage 3 so as to communicate therewith. The front end of the duct 10 is connected to a fume dust generating portion of the laser beam and plasma arc cutting machine (not shown).

Fixed by means of a fixture on the lower end of a partition plate 11 which confines the downstream of the suction passage 3 is the mist generator 8, while a restriction plate 12 is arranged slanted at a position in the suction passage 3 opposite to the partition plate 11. Of course, between the lower end 12a of the restriction plate 12 and the lower end of the mist generator 8 is formed a slight gap. The restriction plate 12 may be of course formed integrally with the mist generator 8.

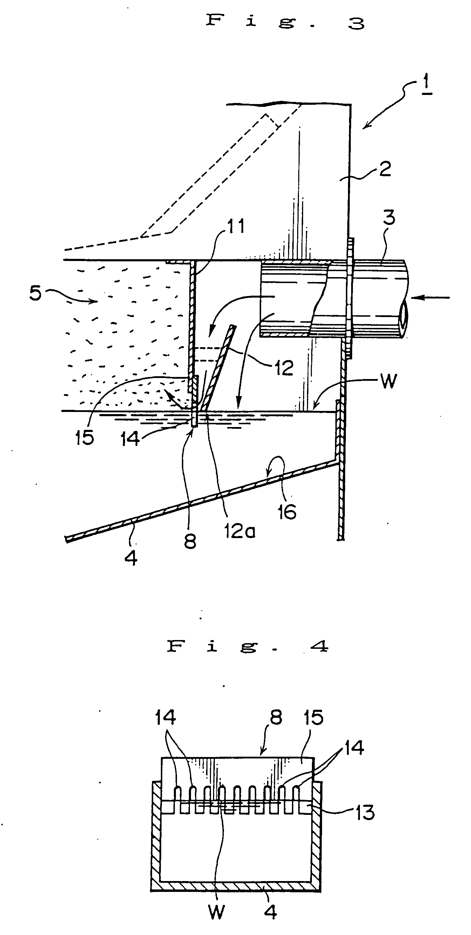

The mist generator 8 is arranged such that the comb-toothed section 13 which comprises continuous convexes and concaves is partly immersed in the water in the water tub 4 as shown in Figs. 3 and 4, and thus there is formed a number of narrow dust-containing air lanes 14 arranged side by side by the comb-toothed section 13 and the water surface W.

Accordingly, the fume dust sucked into the suction passage 3 flows through the gap between the partition plate 11 and the restriction plate 12 except the dust that directly drops into the water of the water tub 4. Since the gap between the partition plate 11 and the restriction plate 12 is gradually narrowed as it approaches the water surface W, the dust-containing air flowing in the gap is gradually speeded up and then flows into the mist room 5 passing through the dust-containing air lanes 14 of the mist generator 8. At this time, the dust-containing air passing through the dust-containing air lanes 14 forces the water surface W to vibrate at high speed so as to generate mist which floats in the mist room 5 and thus there is formed a perfect mist atmosphere.

Of course, by adjusting the height of the water surface W, the amount of generated mist can be appropriately adjusted, because the degree of opening of the dust containing air lanes 14 is increased or decreased.

As for the water tub 4, it is arranged under the housing 2, and in the water is immersed a lower end portion 2a of the side wall of the housing 2 so as to form the mist room 5 together with both the water surface W and the partition plate 11,

At the bottom of the water tub 4 is formed a slope 16 and the sludgy dust precipitated and deposited thereon flows into the pocket 4a to be gathered therein.

Each filter element of the **dust** separating filter 6 is formed of an aluminium alloy, stainless steel or the like which has excellent heat resistance, water resistance and corrosion resistance, and, though unillustrated in the drawings, a plurality of L-typed plates thereof are precisely arranged and fixed to a frame.

The fan 7 can be an air suction type employed in conventional dust collecting apparatus and therefore detailed explanation thereof will be omitted.

Since the wet dust collecting apparatus 1 according to this embodiment is constructed as above, the hot laser and plasma dust sucked into the suction passage 3 of the housing 1 by the action of the fan 7 flows through a gradually narrowed gap between the partition plate 11 and the restriction plate 12 and, after its flow velocity has been gradually increased as it approaches the water surface W, further passes through further restricted dust-containing air lanes 14 in the mist generator 8 with high speed. The dust-containing air thus speeded up in the dust-containing air lanes 14 forces the water surface W to vibrate with high speed so as to generate mist on the water surface W with waterdrops of the water surface W finely grained, and the mist thus generated is sent into the mist room 5 and floats therein.

Since the mist thus generated is floating in the mist room 5, the laser and plasma dust contained in the air is rebounded on the water surface and introduced into the mist room 5, and then sucked into the **dust** separating filter 6 by the fan 7 after adhering to the mist within the mist room 5. Since the laser and plasma dust is very fine, the dust collection can be effectively carried out by making it adhere to the mist. Of course, the laser and plasma dust which is dropped in the water without rebounding on the water surface W is left precipitated on the bottom of the water tub 4.

With the **dust** separating filter 6, the laser and plasma dust adhered to the mist is effectively collected by the principle of collision and inertia and flows down together with the moisture content to be removed. The collected laser and plasma dust may flow down into the water tub 4 together with the moisture content.

Clean air after completion of the dust collection work by the **dust** separating filter 6 is then exhausted outside the housing 2 by the action of the fan 7.

A slope 16 is provided on the bottom portion of the water tub 4 and the sludgy dust precipitated and deposited flows down into a pocket portion 4a and condenses to some degree of hardness so as to be easily removed. Alternatively, the sludgy dust may be automatically removed out of the apparatus by means of a screw conveyer or the like.

While the present invention is explained in the above embodiment by means of an example applied to the wet dust collecting apparatus for collecting laser and plasma dust, it is not limited to such dust and can be applied also to other wet dust collecting apparatus for collecting cold dust or other fine dust generated in large quantities with a shotblast, sanding machine or the like.

Further, in the present invention, it may be arranged that the water level adjustment of the total area of the dust containing air lanes 14 of the mist generator 8 is automatically controlled by utilizing pressure loss which changes in accordance with the amount of sucked air.

## Claims

1. Wet dust collecting apparatus (1) comprising:
a housing (2);
a suction passage (3) leading into the housing for sucking in dust;
a water reservoir (4) disposed in the housing (2);
a mist chamber (5) which is above the water reservoir (4) and downstream of the suction passage (3); and
a comb-toothed mist generator (8) disposed at a position of communication between the suction passage (3) and the mist chamber (5);
the arrangement being such that dust-containing air sucked into the suction passage (3) is directed against the mist generator (8) so as to vibrate the surface of water in the water reservoir (4) at high speed to generate mist in the mist chamber (5) which carries the dust downstream;
**characterised in that** the apparatus further comprises:
a dust filter (6) which is downstream of the mist chamber (5); and
a fan (7) for sucking dust from the suction passage (3) through the mist chamber (5) to the filter (6); and
the suction passage (3) includes a final portion (11, 12) which tapers as it approaches the mist generator (8) so as to increase the speed of the air flowing therethrough towards the mist generator (8).

2. Wet dust collecting apparatus according to claim 1, wherein the teeth of the mist generator (8) have their lower ends immersed in the water of the water reservoir (4).

3. Wet dust collecting apparatus according to claim 1 or 2, further comprising a partition plate (11) which separates the suction passage (3) from the mist chamber (5).

4. Wet dust collecting apparatus according to claim 3, wherein the comb-toothed mist generator (8) extends downwards from the lower end of the partition plate (11).

5. Wet dust collecting apparatus according to any preceding claim, wherein the final portion (11, 12) of the suction passage (3) defines a flow direction which points downwards.

6. Wet dust collecting apparatus according to claim 5, wherein the final portion (11, 12) of the suction passage (3) is arranged to direct the dust-containing air through the mist generator (8) and also against a part of the water surface of the water reservoir (4) immediately upstream of the mist generator (8).

7. Wet dust collecting apparatus according to any preceding claim, wherein the final portion (11, 12) of the suction passage (3) is arranged to receive an upper part of the air flow which enters the suction passage and to deflect a lower part of that air flow down towards the water surface of the water reservoir (4).

## Patentansprüche

1. Apparat (1) zur nassen Staubsammlung mit:
einem Gehäuse (2);
einem Saugdurchgang (3), welcher zum Hereinsaugen des Staubes in das Gehäuse führt;
einem Wasserbehälter (4), der in dem Gehäuse (2) angeordnet ist;
einer Nebelkammer (5), die sich oberhalb des Wasserbehälters (4) und abstromig von dem Saugdurchgang (3) befindet; und
einem kammartig gezahnten Nebelgenerator (8), der an einer Verbindungsposition zwischen dem Saugdurchgang (3) und der Nebelkammer (5) angeordnet ist;
wobei die Anordnung derart ist, daß die in den Saugdurchgang (3) gesaugte, Staub enthaltende Luft gegen den Nebelgenerator (8) gerichtet wird, um die Wasseroberfläche in dem Wasserbehälter (4) mit hoher Geschwindigkeit in Schwingungen zu versetzen, um Nebel in der Nebelkammer (5) zu erzeugen, welcher den Staub abstromig trägt;
**dadurch gekennzeichnet, daß** der Apparat ferner aufweist:
einen Staubfilter (6), der sich abstromig von der Nebelkammer (5) befindet; und ein Gebläse (7) zum Heraussaugen des Staubes aus dem Saugdurchgang (3) durch die Nebelkammer (5) zu dem Filter (6); und wobei
der Saugdurchgang (3) einen Endteil (11, 12) aufweist, der sich beim Nähern an den Nebelgenerator (8) verjüngt, um die Geschwindigkeit der durch diesen Teil zu dem Nebelgenerator (8) hin strömenden Luft zu erhöhen.

2. Apparat zur nassen Staubsammlung nach Anspruch 1, wobei die unteren Enden der Zähne des Staubgenerators (8) in dem Wasser des Wasserbehälters (4) eingetaucht sind.

3. Apparat zur nassen Staubsammlung nach Anspruch 1 oder 2, mit ferner einer Trennplatte (11), welche den Saugdurchgang (3) von der Nebelkammer (5) trennt.

4. Apparat zur nassen Staubsammlung nach Anspruch 3, wobei der kammartig gezahnte Nebelgenerator (8) sich von dem unteren Ende der Trennplatte (11) nach unten erstreckt.

5. Apparat zur nassen Staubsammlung nach einem vorhergehenden Anspruch, wobei der Endteil (11, 12) des Saugdurchganges (3) eine Fließrichtung bestimmt, welche nach unten zeigt.

6. Apparat zur nassen Staubsammlung nach Anspruch 5, wobei der Endteil (11, 12) des Saugdurchganges (3) angeordnet ist, um die Staub enthaltende Luft durch den Nebelgenerator (8) und auch gegen einen Teil der Wasseroberfläche des Wasserbehälters (4) unmittelbar aufstromig des Nebelgenerators (8) zu richten.

7. Apparat zur nassen Staubsammlung nach einem vorhergehenden Anspruch, wobei der Endteil (11, 12) des Saugdurchganges (3) angeordnet ist, um einen oberen Teil des Luftstromes aufzunehmen, welcher in den Saugdurchgang eintritt, und um einen unteren Teil dieses Luftstromes nach unten zu der Wasseroberfläche des Wasserbehälters (4) hin abzulenken.

## Revendications

1. Dépoussiéreur par voie humide (1) comprenant :
un boîtier (2) ;
un passage d'aspiration (3) menant au boîtier pour aspiration de la poussière ;
un réservoir d'eau (4) disposé dans le boîtier (2) ;
une chambre à brouillard (5) qui est située au-dessus du réservoir d'eau (4) et en aval du passage d'aspiration (3) ; et
un générateur de brouillard à dents de peigne (8) disposé à une position de communication entre le passage d'aspiration (3) et la chambre à brouillard (5) ;
l'agencement étant tel que de l'air chargé de poussière aspiré dans le passage d'aspiration (3) est dirigé contre le générateur de brouillard (8) de manière à faire vibrer la surface de l'eau dans le réservoir d'eau (4) à grande vitesse pour produire un brouillard dans la chambre à brouillard (5) qui transporte la poussière en aval ;
**caractérisé en ce que** l'appareil comprend également :
un filtre à poussière (6) qui est situé en aval de la chambre à brouillard (5) ; et
un ventilateur (7) pour aspirer la poussière du passage d'aspiration (3) à travers la chambre à brouillard (5) jusqu'au filtre (6) ; et
le passage d'aspiration (3) comprend une partie terminale (11, 12) qui va en se rétrécissant au fur et à mesure qu'elle se rapproche du générateur de brouillard (8) de manière à augmenter la vitesse de l'air circulant en son sein vers le générateur de brouillard (8).

2. Dépoussiéreur par voie humide selon la revendication 1, dans lequel les dents du générateur de brouillard (8) ont leur extrémité inférieure immergée dans l'eau du réservoir d'eau (4).

3. Dépoussiéreur par voie humide selon la revendication 1 ou la revendication 2, comprenant également une cloison (11) qui sépare le passage d'aspiration (3) de la chambre à brouillard (5).

4. Dépoussiéreur par voie humide selon la revendication 3, dans lequel le générateur de brouillard à dents de peigne (8) s'étend vers le bas depuis l'extrémité inférieure de la cloison (11).

5. Dépoussiéreur par voie humide selon l'une quelconque des revendications précédentes, dans lequel la partie terminale (11, 12) du passage d'aspiration (3) définit un sens d'écoulement qui s'oriente vers le bas.

6. Dépoussiéreur par voie humide selon la revendication 5, dans lequel la partie terminale (11, 12) du passage d'aspiration (3) est agencée de manière à diriger l'air chargé de poussière à travers le générateur de brouillard (8) et également contre une partie de la surface de l'eau dans le réservoir d'eau (4) immédiatement en amont du générateur de brouillard (8).

7. Dépoussiéreur par voie humide selon l'une quelconque des revendications précédentes, dans lequel la partie terminale (11, 12) du passage d'aspiration (3) est agencée de manière à recevoir une partie supérieure du flux d'air qui pénètre dans le passage d'aspiration et dévier une partie inférieure dudit flux d'air vers le bas vers la surface de l'eau dans le réservoir d'eau (4).
